# EUROPÄISCHE PATENTANMELDUNG

(11) **EP 1 491 865 A1**
(43) Veröffentlichungstag der Anmeldung: **29.12.2004**
(21) Anmeldenummer: 04014722.5
(22) Anmeldetag: 23.06.2004
(51) Int. Cl.: G01F 1/32, G01F 15/18, G01N 29/22

(54) **Durchflussmesser nach dem Vortex-Prinzip**

(30) Priorität: 24.06.2003 DE 20309788 U
(71) Anmelder: Bürkert Werke GmbH & Co., D-74653 Ingelfingen (DE)
(72) Erfinder: Ellwein, Christian, Dr., 74523 Schwäbisch Hall (DE)
(74) Vertreter: Degwert, Hartmut, Dipl.-Phys.

(57) **Zusammenfassung**

Durchflusssensor nach dem Vortex-Prinzip, wobei die Erfassung der Wirbel mit Ultraschall geschieht. Der Durchflusssensor besteht aus einem Gehäuse (10) mit einem Strömungskanal (12), der das Gehäuse durchquert und mit mindestens einem Ultraschall-Sender (24a,28a) und mindestens einem Ultraschall-Empfänger (24b,28b), die in dem Gehäuse neben dem Strömungskanal angeordnet sind. Ultraschall-Sender und Ultraschall-Empfänger sind als jeweils eigene Schallelemente realisiert, die über wenigstens zwei auf ihrer Manteloberfläche abstehende Stege, die im wesentlichen parallel zueinander und parallel zur Bodenfläche des Schallelements verlaufen, mit der Gehäuse verbunden sind, wobei die Stege das Gehäuse lokal begrenzt kontaktieren. Zum Strömungskanal hin weisen sie je eine Membran auf.

## Beschreibung

Die Erfindung betrifft einen Durchflusssensor nach dem Vortex-Prinzip, wobei die Erfassung der Wirbel mit Ultraschall geschieht.

Das Vortex-Verfahren ist ein weit verbreitetes und in der Literatur gut beschriebenes Prinzip der Durchflussmessung an Gasen und Flüssigkeiten. In den Strömungskanal wird ein Störkörper (auch Bluff-Body genannt) eingebracht, an dem sich Wirbel nach dem Prinzip einer Karmanschen Wirbelstraße ablösen. Diese Wirbel können dann über Drucksensoren, optische Aufnehmer oder auch akustische Sensoren, die vorzugsweise mit Ultraschall arbeiten, erkannt werden. Die Ablösefrequenz der Wirbel ist proportional zum Volumenstrom des Mediums.

In dieser Erfindung wird ein Durchflusssensor nach dem Vortex-Prinzip vorgestellt, der Ultraschallaufnehmer zur Detektion der Wirbel einsetzt. Dazu wird, gemäß dem Stand der Technik, eine Ultraschallstrecke senkrecht zum Strömungskanal im Sensor integriert. Die Schallwelle durchdringt das gemessene Medium senkrecht zu dessen Flussrichtung. Wenn ein Wirbel den Ultraschall passiert, wird der Schall moduliert, und am Empfangssignal ist der Wirbel in einer Phasenverschiebung zum gesendeten Signal erkennbar.

Für einen Einsatz des Durchflusssensors im explosionsgefährdeten Bereich ist es wünschenswert, eine Zonentrennung zwischen dem explosionsgefährdeten Medium ("Zone 0") und den elektrischen Bauteilen ("Zone 1") zu erreichen. Wenn die elektronischen Bauteile nicht in der "Zone 0" liegen, ist der nötige konstruktive Aufwand für eine Zulassung des Sensors bei der zuständigen Behörde deutlich geringer. Der Ultraschall wird üblicherweise mit elektronischen Bauteilen, zum Beispiel mit Piezoelementen, erzeugt. Es ist also wünschenswert, den Piezokristall nach den Vorschriften des Explosionsschutzes vom Medium zu trennen und eine Zonentrennung zu erreichen. Das kann beispielsweise durch eine metallische Trennmembran (zum Beispiel eine Rohrwandung) zwischen dem Fluidkanal und dem Piezoelement erreicht werden. Wird das Piezoelement an einer Rohrwandung außen angebracht, so ergibt sich die Problematik, dass der Schall weitgehend über das Metall und nicht wie gewünscht über die zwischen den Piezoelementen liegende Luftstrecke übertragen wird.

Es wird also ein Durchflusssensor benötigt, der sowohl die Zonentrennung zwischen "Zone 0" und "Zone 1" nach Gesichtspunkten des Explosionsschutzes erreicht als auch eine ausreichende akustische Übertragung des Ultraschalls über die Luftstrecke gewährleistet.

Dies wird durch einen Durchflusssensor nach dem Vortex-Prinzip erreicht, wobei die Erfassung der Wirbel mit Ultraschall geschieht. Der Durchflusssensor umfasst ein Gehäuse mit einem das Gehäuse durchquerenden Strömungskanal und mit mindestens einem Ultraschall-Sender und mindestens einem Ultraschall-Empfänger, die in dem Gehäuse neben dem Strömungskanal angeordnet sind. Ultraschall-Sender und Ultraschall-Empfänger sind vom angrenzenden Körper des Gehäuses durch einen Spalt oder durch mehrere Spalte getrennt. Sie weisen zum Strömungskanal hin je eine Membran auf. Die Spalte stellen sicher, dass nur eine geringe Übertragung von Ultraschall auf das Gehäuse erfolgt. Die zum Strömungskanal hinweisende Membran führt zu einer Zonentrennung bei gleichzeitig guter Ultraschallübertragung.

Vorzugsweise sind Ultraschall-Sender und Ultraschall-Empfänger jeweils in eigenen Schallelementen realisiert, die das Gehäuse nur lokal begrenzt kontaktieren. Vorzugsweise ist das Gehäuse ein massives Metallgehäuse, in dem eine erste durchgehende Bohrung den Strömungskanal realisiert.

In einer bevorzugten Ausführungsform umfasst das Gehäuse eine zweite durchgehende Bohrung, deren Mittelachse die Mittelachse der ersten durchgehenden Bohrung im wesentlichen senkrecht schneidet und die einen ersten Durchmesser an den beiden äußeren Enden und einen zweiten kleineren Durchmesser in der Mitte aufweist. Diese Bohrung kann einen Ultraschall-Sender und einen Ultraschall-Empfänger aufnehmen und dicht an den Strömungskanal heranführen.

Die Schallelemente sind vorzugsweise zylinderförmig ausgebildet und enthalten ein im wesentlichen senkrecht zu einer Bodenfläche verlaufendes Sackloch. In diesem Sackloch ist auf der Bodenfläche ein Piezoelement befestigt, z.B. kann das Piezoelement eingeklebt sein. Die Bodenfläche bildet eine Membran.

In ähnlicher Form ist ein Luftschallwandler mit Membran für Ultraschall von der Firma Morgan Electro Ceramics im Handbuch "Piezoxide (PXE)" (1. Auflage, Juli 1988, ISBN 3-7785-1755-4) auf der Seite 136 beschrieben. Bei diesem Schallelement handelt es sich in der dort beschriebenen Form nur um einen Resonator für die Piezoelemente. Die Aspekte des Explosionsschutzes und die daraus resultierenden Anforderungen wurden in diesem Entwurf nicht in Betracht gezogen.

In einer bevorzugten Ausführungsform sind die Schallelemente mit abstehenden Stegen versehen. Nach dem Einbau der Schallelemente in das Sensorgehäuse berühren nur die Stege das Gehäuse und es bildet sich ein Spalt oder mehrere Spalte aus. Die Verbindung zwischen Gehäuse und Schallelement erfolgt also nicht durch eine ausgedehnte Fläche, sondern vorzugsweise nur lokal begrenzt. Die Stege haben nach den geltenden Vorschriften des Explosionsschutzes vorzugsweise eine senkrechte Höhe über der Schallelementoberfläche von maximal 0,3 mm und einen Abstand voneinander von mindestens 6 mm. Dadurch wird ein Luftspalt erzeugt, der durch seine geometrischen Ausmaße eine druckfeste Wirkung hat und als Zonentrennung zwischen der "Zone 0" und der "Zone 1" dient. Es wird außerdem erreicht, dass die Schallelemente so mit dem Gehäuse und dem Strömungskanal verbunden werden, dass der Ultraschall im gewünschten Frequenzbereich nur wenig auf Gehäuse und Strömungskanal, sondern vorzugsweise in die vor den Schallelementen liegende Luft abgegeben wird. In einer bevorzugten Ausführungsform sind die Stege aus Metall. Sie können damit einfach bei der Herstellung der Schallelemente mitgefertigt werden.

In einer weiteren bevorzugten Ausführungsform wird ein Spalt oder mehrere Spalte zwischen dem Ultraschall-Sender und dem Ultraschall-Empfänger und dem Gehäuse durch ein Schallelement erreicht, das einen Bereich mit geringem Durchmesser aufweist auf den ein Ring aufgesteckt ist. Dieser Ring ist vorzugsweise aus Kunststoff gefertigt, der den Schall schlechter als Metall leitet. Damit kann der lokal begrenzte Kontakt zwischen Schallelement und Gehäuse auf etwas größerer Fläche erfolgen. Der Ring hat einen größeren Außendurchmesser als der Bereich des Schallelements ohne aufgesteckten Ring. Somit wird ein Spalt erzeugt und das Schallelement druckfest gemäß der druckfesten Kapselung in das Gehäuse des Durchflusssensors integriert.

Weitere Merkmale und Vorteile der Erfindung ergeben sich aus der nachfolgenden Beschreibung unter Bezugnahme auf die beigefügten Zeichnungen. In den Zeichnungen zeigen:
- Figur 1 ein Gehäuse eines erfindungsgemäßen Durchflusssensors;
- Figur 1a ein schematischer Längsschnitt durch eine Bohrung des Gehäuses;
- Figur 2 eine Ausführungsform eines Schallelements;
- Figur 3 eine weitere Ausführung eines Schallelements;
- Figur 3a ein schematischer Längsschnitt durch das Schallelement von Figur 3; und
- Figur 4 eine schematische Schnittdarstellung entlang der Linie IV-IV in Figur 1 durch das Gehäuse eines erfindungsgemäßen Durchflusssensors mit eingesetzten Schallelementen.

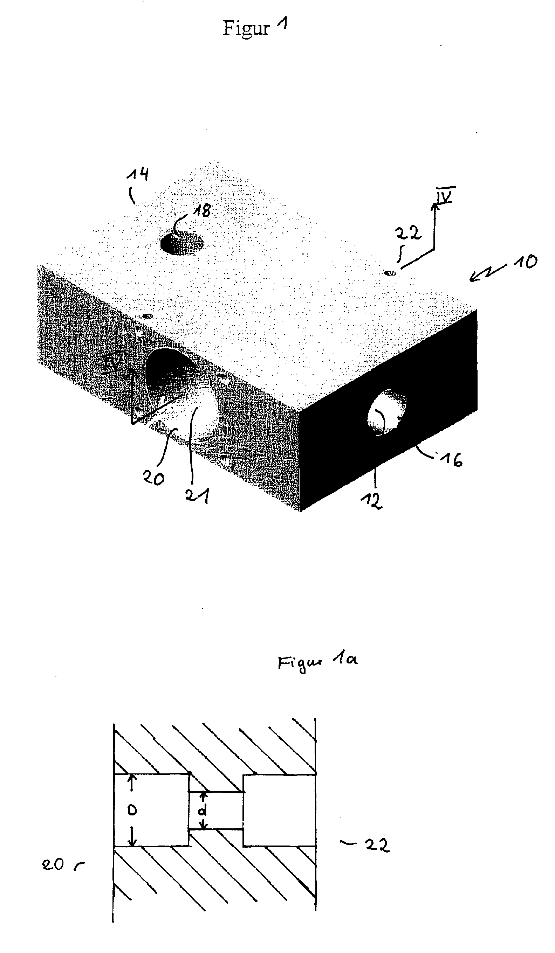

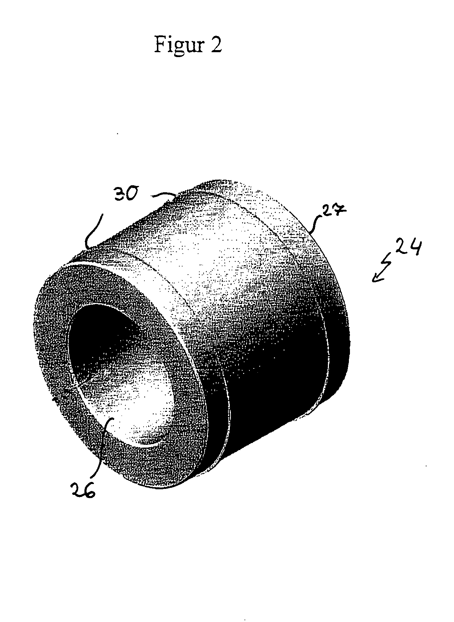

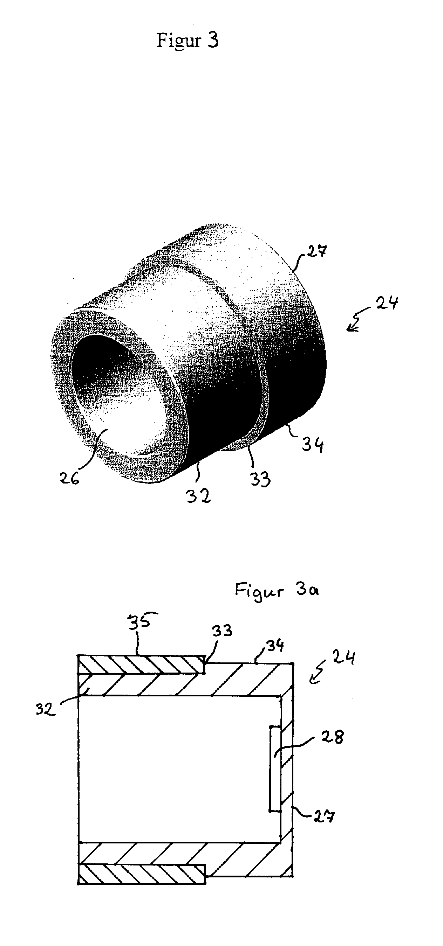

Figur 1 zeigt eine dreidimensionale Darstellung eines Gehäuses 10 eines erfindungsgemäßen Durchflusssensors. Ein Strömungskanal 12 verläuft als durchgehende Bohrung längs durch das Gehäuse 10, beginnend an einem in Fig. 1 nicht sichtbaren Eingang 14 und endend an einem Ausgang 16. Durch eine Bohrung 18 kann ein Störkörper (Bluff-Body) zur Erzeugung der Wirbel für das Vortex-Prinzip eingebracht werden. Eine zweite durchgehende Bohrung 21 verläuft von einer Öffnung 20 zu einer gegenüberliegenden in Fig. 1 nicht sichtbaren Öffnung 22. Die Mittelachse dieser durchgehenden Bohrung schneidet die Mittelachse des Strömungskanals 12 im wesentlichen senkrecht. In der Längsschnittdarstellung dieser Bohrung in Figur 1a wird deutlich, dass die Bohrung an ihren beiden äußeren Enden einen größeren Durchmesser D aufweist und im Mittelbereich einen kleineren Durchmesser d. In den Bohrungsbereich mit dem größeren Durchmesser D können Schallelemente mit Piezoelementen eingebracht werden. Diese Schallelemente werden anhand der Figuren 2 und 3 näher erläutert. Die in das Gehäuse 10 am Eingang 14 in den Strömungskanal 12 einströmende Flüssigkeit wird durch den Störkörper, der über die Bohrung 18 in den Strömungskanal eingebracht ist, verwirbelt. Die damit erzeugte Wirbelstrecke kreuzt die Bohrung 21 und läuft damit zwischen den beiden Schallelementen hindurch. Anschließend verlässt die Flüssigkeit über den Ausgang 16 den Strömungskanal 12 und damit das Gehäuse 10.

Figur 2 zeigt eine Ausführungsform eines Schallelementes 24. Es handelt sich hierbei um einen Metallzylinder mit einem eingebrachten Sackloch 26. Das Sackloch verläuft im wesentlichen senkrecht zu einer Bodenfläche des Schallelements 24. Die verbleibende Wandstärke am Boden des Sackloches ist ausreichend, um nach den geltenden Vorschriften eine Zonentrennung zu gewährleisten. Die Bodenfläche des Schallelements bildet eine Membran 27. An den Boden des Sackloches wird innen ein Piezoelement 28 angebracht. Dies kann z.B. durch Kleben erfolgen. Auf der Manteloberfläche des zylinderförmigen Schallelements 24 sind zwei umlaufende Metallstege 30 realisiert. Die Metallstege 30 verlaufen parallel zueinander und parallel zur Bodenfläche bzw. Membran 27 des Schallelements. Vorzugsweise haben diese Metallstege eine senkrechte Höhe über der Zylinderoberfläche von maximal 0,3 mm und einen Abstand voneinander von mindestens 6 mm. Beim Einbringen dieses Schallelements in Öffnung 20 oder Öffnung 22 des Gehäuses 10, berühren nur die Metallstege 30 am Mantelumfang des Zylinders die Innenwände der Gehäusebohrungen. Dadurch wird ein druckfester Spalt erzeugt, der als Zonentrennung zwischen der "Zone 0" und der "Zone 1" dient. Nicht dargestellt ist die elektrische Beschaltung des Piezoelementes 28, das im Sackloch 26 am Boden verklebt ist. Je nach Beschaltung dient dieses Schallelement als Ultraschall-Sender oder als Ultraschall-Empfänger.

Figur 3 zeigt eine weitere Ausführungsform eines Schallelements 24. Die Grundform des Schallelements ist wiederum zylinderförmig und enthält ein im wesentlichen senkrecht zu einer Bodenfläche verlaufendes Sackloch. Die Bodenfläche bildet wieder die Membran 27. In diesem Sackloch 26 ist auf der Bodenfläche ein Piezoelement 28 eingeklebt. Ein der Öffnung des Sackloches zugewandter Teilbereich 32 des Metallzylinders ist abgedreht, so dass eine Stufe 33 entsteht. Der Außenradius auf dieser Seite des Zylinders ist kleiner als der Außenradius im Teilbereich 34 auf der geschlossenen Zylinderseite. Auf Teilbereich 32 des Schallelements wird ein Ring 35 aufgesteckt, wie in Figur 3a zu sehen. Figur 3a zeigt einen schematischen Längsschnitt durch das Schallelement 24 der Figur 3. Der aufgesteckte Ring 35 berührt die Stufe 33. Ring 35 kann z.B. ein Kunststoffring sein, der den Schall im Vergleich zu Metall schlecht leitet. Der Außendurchmesser im Teilbereich 34 des Schallelements ist kleiner als der Außendurchmesser von Ring 35. Wird dieses Schallelement mit aufgestecktem Ring in eine der Öffnungen 20 oder 22 des Gehäuses 10 gesteckt, so berührt das Schallelement nur lokal begrenzt im Bereich des Rings 35 das Gehäuse 10. Somit bildet sich wiederum zwischen Schallelement 24 und Gehäuse 10 ein druckfester Spalt.

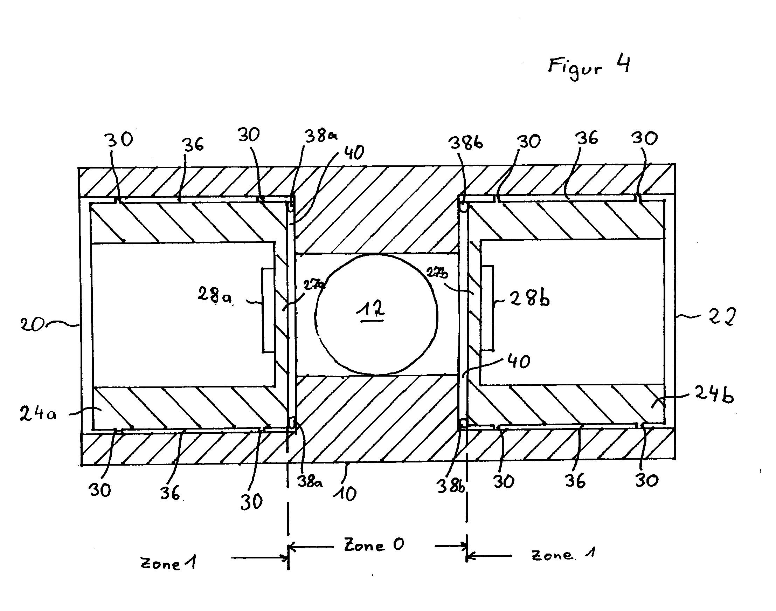

Figur 4 zeigt einen schematischen Schnitt durch das Gehäuse 10 entlang der in Figur 1 dargestellten Schnittlinie IV-IV, d.h. durch den Kreuzungsbereich von Strömungskanal 12 und Bohrung 21. In die Öffnungen 20 und 22 ist jeweils ein Schallelement 24a, 24b entsprechend der Ausführungsform nach Figur 2 eingesetzt. Der durch Loch 18 einzubringende Störkörper ist nicht dargestellt. Am Boden der Schallelemente 24a, 24b ist jeweils ein Piezoelement 28a, 28b angeklebt. Abhängig von der nicht dargestellten elektrischen Beschaltung handelt es sich bei Schallelement 24a mit Piezoelement 28a beispielsweise um einen Ultraschall-Sender und bei Schallelement 24b mit Piezoelement 28b um einen Ultraschall-Empfänger. Der Strömungskanal 12 verläuft zwischen diesen beiden Schallelementen senkrecht zur Zeichnungsebene. Die Flüssigkeit, die durch Strömungskanal 12 strömt, ist an dieser Stelle bereits verwirbelt. In der Schnittdarstellung werden Spalte 36 deutlich, die sich durch Metallstege 30 zwischen den Mantelflächen der Schallelemente 24a, 24b und Gehäuse 10 ergeben.

Die Bodenfläche des Schallelements 24a bildet die Membran 27a und die Bodenfläche des Schallelements 24b bildet Membran 27b. Figur 4 zeigt den Bereich von "Zone 0" und "Zone 1 ". "Zone 0" liegt zwischen Membran 27a und Membran 27b. In "Zone 0" strömt die explosionsgefährdete Flüssigkeit durch Strömungskanal 12. Die elektrischen Bauelemente Piezoelement 28a und 28b liegen jeweils in "Zone 1". Durch Membran 27a und 27b ist sichergestellt, dass sie nicht mit der Flüssigkeit in Berührung kommen können. Membranen 27a und 27b bewirken eine Zonentrennung, d.h. die elektrischen Bauteile des Ultraschall-Senders und des Ultraschall-Empfängers, insbesondere die Piezoelemente 28a und 28 b, kommen nicht in Berührung mit der explosionsgefährdeten Flüssigkeit im Strömungskanal. Um sicherzustellen, dass das gasförmige Medium im Kreuzungsbereich nicht aus dem Gehäuse austreten kann, sind zwischen Gehäuse 10 und Stirnfläche der Schallelemente 24a, 24b Dichtringe 38a, 38b eingefügt. Durch diese Dichtringe 38a und 38b bilden sich Spalte 40 zwischen den Stirnflächen der Schallelemente und Gehäuse 10. Die Ultraschallübertragung vom Ultraschall-Sender 24a, 28a zum Ultraschall-Empfänger 24b, 28b erfolgt über Membran 27a, Strömungskanal 12 und Membran 27b. Ein Schallübertritt auf Gehäuse 10 wird weitestgehend vermieden, da die Schallelemente 24 nur lokal über die Metallstege 30 bzw. über Dichtringe 38a, 38b das Gehäuse 10 kontaktieren.

## Patentansprüche

1. Durchflusssensor nach dem Vortex-Prinzip, wobei die Erfassung der Wirbel mit Ultraschall geschieht,
- mit einem Gehäuse (10),
- mit einem das Gehäuse (10) durchquerenden Strömungskanal (12) und
- mit mindestens einem Ultraschall-Sender (24a, 28a) und mindestens einem Ultraschall-Empfänger (24b, 28b), die in dem Gehäuse neben dem Strömungskanal (12) angeordnet sind,
wobei Ultraschall-Sender und Ultraschall-Empfänger vom angrenzenden Körper des Gehäuses (10) durch einen Spalt oder mehrere Spalte (36, 40) getrennt sind und zum Strömungskanal (12) hin je eine Membran (27) aufweisen.

2. Durchflusssensor nach Anspruch 1, wobei Ultraschall-Sender (24a, 28a) und Ultraschall-Empfänger (24b, 28b) in jeweils eigenen Schallelementen (24) realisiert sind, die den Körper des Gehäuses (10) nur lokal begrenzt kontaktieren.

3. Durchflusssensor nach Anspruch 2, wobei das Gehäuse ein massives Metallgehäuse ist.

4. Durchflusssensor nach Anspruch 3, wobei eine erste durchgehende Bohrung durch das Gehäuse (10) den Strömungskanal (12) realisiert.

5. Durchflusssensor nach Anspruch 4, wobei das Gehäuse (10) eine zweite durchgehende Bohrung (21) umfasst, deren Mittelachse die Mittelachse der ersten durchgehenden Bohrung (21) im wesentlichen senkrecht schneidet und die einen ersten Durchmesser (D) an den beiden äußeren Enden und einen zweiten kleineren Durchmesser (d) in der Mitte aufweist und die zur Aufnahme der Schallelemente (24) dient.

6. Durchflusssensor nach Anspruch 5, wobei das Gehäuse (10) eine dritte Bohrung (18) umfasst, die zur Einbringung eines Störkörpers in den Strömungskanal dient.

7. Durchflusssensor nach einem der Ansprüche 2 bis 6, wobei das Schallelement (24) ein Sackloch (26) enthält, das im wesentlichen senkrecht zu einer Bodenfläche ist, und wobei auf der Bodenfläche des Sacklochs ein Piezoelement (28) befestigt ist, und wobei die Bodenfläche die Membran (27) bildet.

8. Durchflusssensor nach einem der Ansprüche 2 bis 7, wobei die Schallelemente (24) zylinderförmig ausgebildet sind.

9. Durchflusssensor nach einem der Ansprüche 2 bis 8, wobei der oder die Spalte (36) durch auf der Manteloberfläche der Schallelemente abstehende Stege (30) realisiert sind, die das Gehäuse (10) lokal begrenzt kontaktieren.

10. Durchflusssensor nach Anspruch 9, wobei die Stege aus Metall gefertigt sind.

11. Durchflusssensor nach Anspruch 9 oder Anspruch 10, wobei wenigstens zwei Stege (30) im wesentlichen parallel zueinander und parallel zur Bodenfläche des Schallelements (24) auf der Manteloberfläche des Schallelements verlaufen.

12. Durchflusssensor nach Anspruch 11, wobei die Stege eine Höhe von maximal 0,3 mm haben und mindestens 6 mm voneinander entfernt sind.

13. Durchflusssensor nach Anspruch 8, wobei das Schallelement (24) einen Bereich (32) mit geringerem Außendurchmesser aufweist und wobei der oder die Spalte (36) durch einen in diesem Bereich auf das Schallelement aufgesteckten Ring (35) realisiert sind, der das Gehäuse (10) lokal begrenzt kontaktiert.

14. Durchflusssensor nach Anspruch 13, wobei der Ring (35) aus Kunststoff ist.

15. Durchflusssensor nach einem der vorangegangenen Ansprüche, wobei der Spalt (40) durch einen Dichtring (38) realisiert ist.
